# EUROPÄISCHE PATENTSCHRIFT

(11) **EP 3 290 601 B1**
(45) Veröffentlichungstag und Bekanntmachung des Hinweises auf die Patenterteilung: **18.10.2023**
(21) Anmeldenummer: 17185523.2
(22) Anmeldetag: 09.08.2017
(51) Int. Cl.: E03C 1/05

(54) **ANORDNUNG AUS EINER INSTALLATIONSEINHEIT UND EINEM SANITÄRRAUM**
ARRANGEMENT OF AN INSTALLATION UNIT AND A SANITARY ROOM
AGENCEMENT D'UNE UNITÉ D'INSTALLATION ET D'UN LOCAL SANITAIRE

(30) Priorität: 02.09.2016 DE 102016010576
(43) Veröffentlichungstag der Anmeldung: 07.03.2018
(73) Patentinhaber: Grohe AG, 58653 Hemer (DE)
(72) Erfinder: Gaida, Waldemar, 40545 Düsseldorf (DE); Mielke, Achim, 32457 Porta Westfalica (DE)

(56) Entgegenhaltungen:
- EP-A1- 2 910 694
- DE-A1- 10 157 975
- DE-A1-102014 219 679
- US-A1- 2008 245 422
- US-A1- 2010 095 451
- US-A1- 2015 108 901

## Beschreibung

Die Erfindung betrifft eine Anordnung aus einer Installationseinheit und einem Sanitärraum nach dem Oberbegriff des Patentanspruches 1, siehe z.B. das Dokument US2008024422A1.

Eine drahtlose Energie- und/oder Signalübertragung findet in unterschiedlichen Technikbereichen Anwendung. Eine solche drahtlosen Energie- und/oder Signalübertragung wird zum Beispiel mittels induktiver Kopplung durchgeführt, bei der von einer Sendereinheit mit zugeordneter Senderantenne eine drahtlose Energie- und/oder Signalübertragung zu einer Empfängereinheit mit zugehöriger Empfängerantenne erfolgt. Anwendungsbeispiele sind eine drahtlose Aufladung von Akkus von Mobilgeräten, etwa Mobiltelefonen oder Zahnbürsten.

In einer modernen Badarchitekturwerden zunehmend elektronisch gesteuerte Funktionseinheiten vom Endnutzer verlangt. Hierbei tritt immer wieder das Problem einer elektrischen Energie- und/oder Signalversorgung auf. Ein Anschlusskabel zur Signal- und/oder Energieübertragung ist hierbei sehr störend.

In einer gattungsgemäßen Installationseinheit für einen Sanitärraum ist zumindest ein Wandverkleidungselement bereitgestellt, das eine Sanitärraumwand überdeckt. Die Installationseinheit kann einen Montagerahmen aufweisen, an dem z.B. Armaturen-Komponenten, ein WC-Spülkasten und/oder ein WC-Becken montierbar sind. Der Montagerahmen kann zusammen mit den daran montierten Anbauteilen mit Hilfe von Wandverkleidungselementen überdeckt sein, die beispielhaft aus Gipskartonplatten aufgebaut sind, die sichtseitig mit Fliesen verklebt sind.

Die Aufgabe der Erfindung besteht darin, eine Installationseinheit für einen Sanitärraum bereitzustellen, bei dem in einfacher Weise elektronisch gesteuerte Funktionen realisierbar sind.

Die Aufgabe ist durch die Merkmale des Patentanspruches 1 gelöst. Bevorzugte Weiterbildungen der Erfindung sind in den Unteransprüchen offenbart.

Es zeigen:
- Figuren 1 bis 4: in unterschiedlichen Ansichten eine Installationseinheit mit daran verbautem Waschtisch; und
- Figuren 5: in einer grob schematischen Darstellung einen Duschbereich mit realisierter drahtloser Energie- und/oder Signalübertragung.

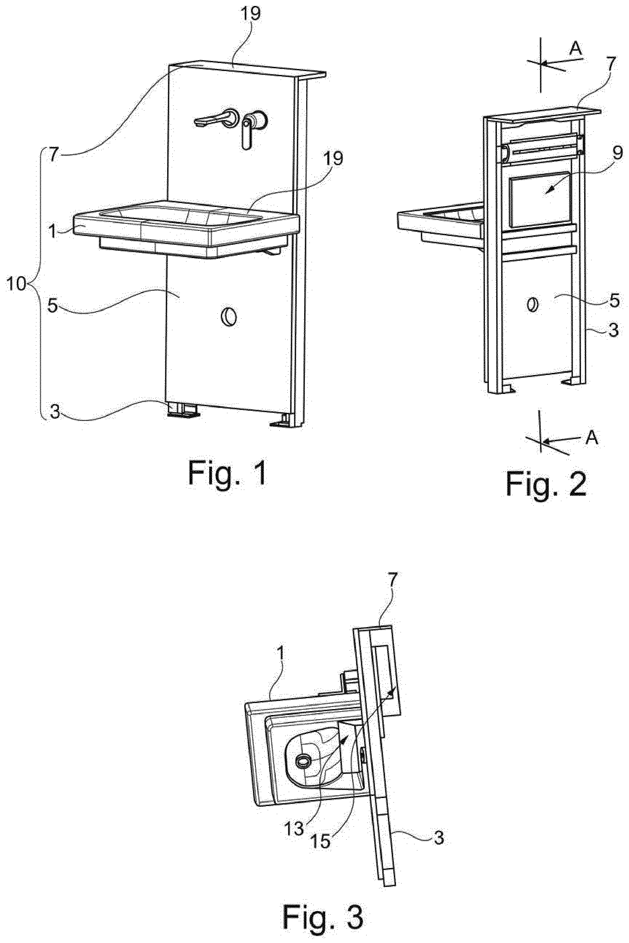

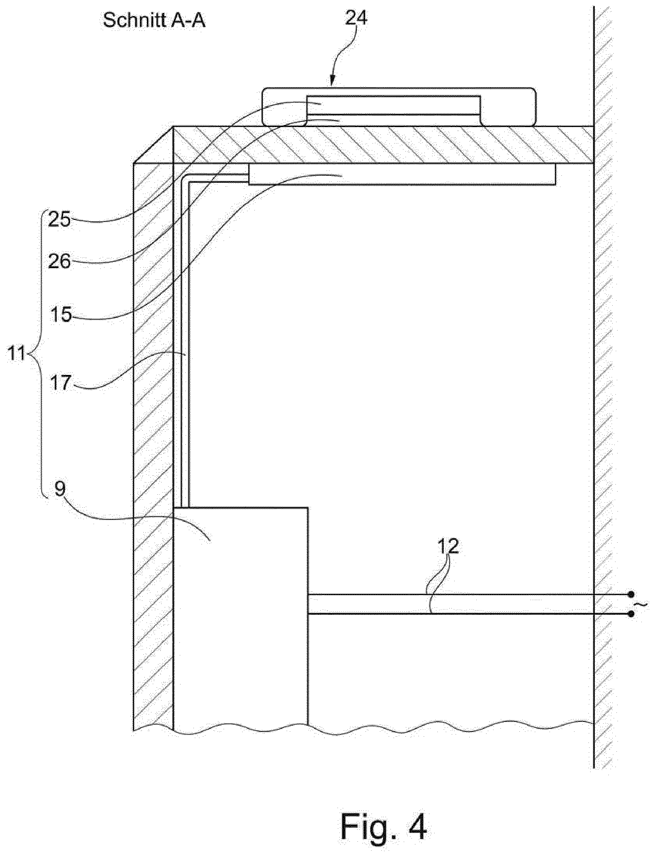

In den Figuren 1 bis 3 ist eine Installationseinheit 10 gemäß einem ersten Ausführungsbeispiel gezeigt, in der ein Waschtisch 1 verbaut ist. Die Installationseinheit 10 weist einen Montagerahmen 3 auf, an dem nicht dargestellte Armatur-Komponenten sowie ein horizontales Wandverkleidungselement 7 und ein vertikales Wandverkleidungselement 5 befestigt sind. An der von der Sichtseite abgewandten Rückseite des vertikalen Wandverkleidungselementes 5 ist eine Sendereinheit 9 (Fig. 2) angeordnet, die Bestandteil einer drahtlosen Energie- und/oder Signalübertragungseinrichtung 11 (Fig. 4) ist. Die Sendereinheit 9 ist über Versorgungsleitungen 12 am Stromversorgungsnetz angeschlossen. Zudem sind der Sendereinheit 9 in der Fig. 3 zwei Senderantennen 13, 15 zugeordnet. Diese sind als von der Sendereinheit 9 separate Bauteile in der Installationseinheit 10 angeordnet und über Verbindungsleitungen 17 (nur in der Fig. 4 gezeigt) mit der Sendereinheit 9 elektrisch in Kontakt.

Die erste Senderantenne 13 ist in der Figur 3 an einer Unterseite des Waschtisches 1 angeordnet, und zwar gegenüberliegend zu einer oberseitigen horizontalen Mobilgeräte-Ablagefläche 19 des Waschtisches 1. Die zweite Senderantenne 15 ist an der Unterseite des oberen horizontalen Wandverkleidungselementes 7 angeordnet, das ebenfalls eine horizontale Mobilgeräte-Ablagefläche 19 bereitstellt. Die beiden Mobilgeräte-Ablageflächen 19 können über entsprechende Kennzeichnungen für den Nutzer hervorgehoben sein.

In der vergrößerten Teilschnittdarstellung der Fig. 4 ist auf der Ablagefläche 19 des oberen Wandverkleidungselements 7 ein Mobilgerät 24 abgelegt, in dem eine mit der Sendereinheit 9 drahtlos kommunizierbare Empfängereinheit 25 mit zugeordneter Empfängerantenne 26 integriert ist. Dadurch baut sich eine drahtlose Signal- und/oder Energieübertragung zwischen der Sendereinheit 9 und der im Mobilgerät 24 integrierten Empfängereinheit 25 auf, um das Mobilgerät 24 mit elektrischer Energie zu versorgen und/oder um ein Akku des Mobilgeräts 24 mit aufzuladen.

Alternativ zu den Figuren 1 bis 4 kann in der Installationseinheit 10 anstelle des Waschtisches 1 ein WC-Becken sowie ein WC-Spülkasten verbaut sei, der von den vertikalen und horizontalen Wandverkleidungselementen 5, 7 überdeckt ist. In diesem Fall kann lediglich das obere horizontale Wandverkleidungselement 7 eine Mobilgeräte-Ablagefläche 19 bereitstellen, so dass lediglich unterhalb des horizontalen Wandverkleidungselementes 7 die Senderantenne 15 angeordnet.

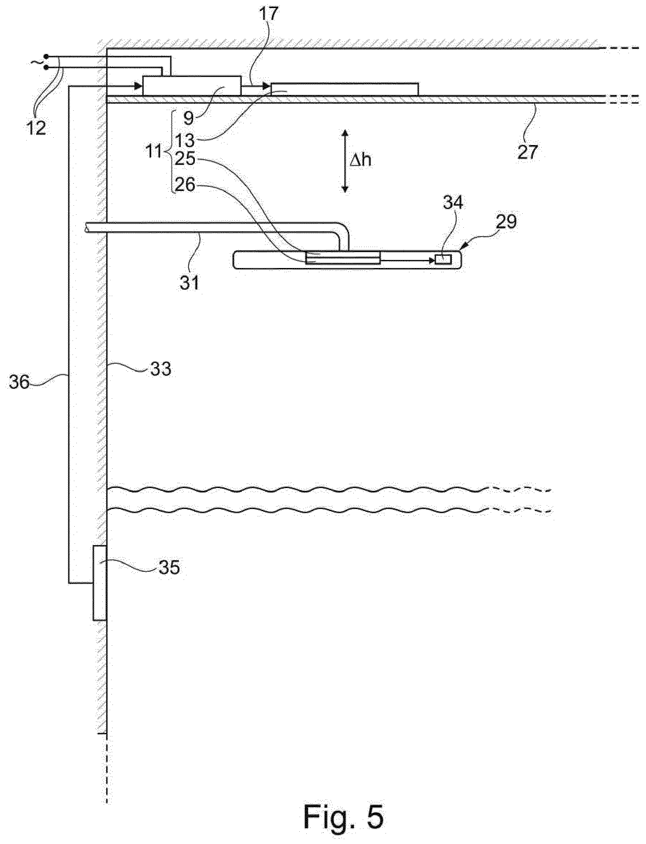

In der Figur 5 ist ein Duschbereich in einem Sanitärraum angedeutet. Dessen Raumdecke ist von einem Wandverkleidungselement 27 überdeckt, das den Duschbereich nach oben begrenzt. Im Duschbereich ist ein Duschkopf 29 bewegungsfest mit Hilfe einer Mischwasser-Zulaufleitung 31 an einer Sanitärraum-Seitenwand 33 montiert. Der Duschkopf 29 ist in der Figur 5 über einen lichten Höhenversatz Δh von dem Wandverkleidungselement 27 beabstandet. Wie in der Fig. 5 angedeutet ist, sind im Duschkopf 29 die Empfängereinheit 25 mit zugeordneter Empfängerantenne 26 integriert. Diese bildet zusammen mit der am deckenseitigen Wandverkleidungselement 27 montierten Sendereinheit 9 mit zugeordneter Senderantenne 13 eine drahtlose Signal- und/oder Energieübertragungseinrichtung 11. Um eine einwandfreie drahtlose Energie- und/oder Signalübertragung zu unterstützen, ist die Senderantenne 13 in der Hochrichtung in Flucht oberhalb der duschkopfseitigen Empfängerantenne 26 angeordnet.

Über die drahtlose Signal- und/oder Energieübertragungseinrichtung 11 werden elektrische Energie sowie Steuersignale zu einem im Duschkopf 29 angeordneten, elektrisch betätigbaren Aktuator 34 geleitet. Mit dem Aktuator 34 kann beispielhaft eine Strahlartverstellung erfolgen. Zur Ausführung der obigen Duschfunktion ist der Aktuator 34 über die drahtlose Signal- und/oder Energieübertragungseinrichtung 11 in Signalverbindung 36mit einer nutzerseitig betätigbaren Bedieneinheit 35.

### Bezugszeichenliste

- 1: Waschtisch
- 3: Montagerahmen
- 5, 7: Wandverkleidungselemente
- 9: Sendereinheit
- 10: Installationseinheit
- 11: drahtlose Signal- und/oder Einergieübertragungseinrichtung
- 12: Versorgungsleitungen
- 13, 15: Senderantennen
- 17: Verbindungsleitung
- 19: Mobilgeräte-Ablagefläche
- 24: Mobilgerät 25 Empfängereinheit
- 26: Empfängerantenne
- 27: Wandverkleidungselement
- 29: Duschkopf
- 31: Mischwasserzulauf
- 33: Seitenwand
- 34: elektrisch betätigbarer Aktuator
- 35: Bedieneinheit
- 36: Signalverbindung

## Patentansprüche

1. Anordnung aus einer Installationseinheit und einem Sanitärraum, wobei die Installationseinheit zumindest ein Wandverkleidungselement (5, 7, 27) aufweist, mittels dem eine Sanitärraumwand des Sanitärraums überdeckt ist, wobei auf der von der Sichtseite abgewandten Rückseite des Wandverkleidungselements (5, 7, 27) zumindest eine Sendereinheit (9) mit zumindest einer zugeordneten Senderantenne (13, 15) angeordnet ist, die Bestandteil einer drahtlosen Energie- und/oder Signalübertragungseinrichtung (11) ist, und **dadurch gekennzeichnet, dass** die Sendereinheit (9) in drahtlose Energie- und/oder Signalübertragungsverbindung mit einer im Sanitärraum positionierten Empfängereinheit (25) koppelbar ist, wobei die Empfängereinheit (25) mit zugeordneter Empfängerantenne (26) in einem Mobilgerät (24), etwa Mobiltelefon oder elektrische Zahnbürste, verbaut ist, und dass zur Energieversorgung des Mobilgeräts (24) oder zur Energiespeicherung im Mobilgerät (24) elektrische Energie von der Sendereinheit (9) zur Empfängereinheit (25) im Mobilgerät (24) übertragbar ist oder dass die Empfängereinheit (25) mit zugeordneter Empfängerantenne (26) unmittelbar in einem Duschkopf (29) eingekapselt ist.

2. Anordnung nach Anspruch 1, insofern die Empfängereinheit (25) mit zugeordneter Empfängerantenne (26) in dem Mobilgerät (24) verbaut ist, **dadurch gekennzeichnet, dass** das Wandverkleidungselement (7) auf seiner Sichtseite eine insbesondere horizontale Mobilgeräte-Ablagefläche (19) aufweist, auf der das Mobilgerät (24) für eine drahtlose Energie- und/oder Signalübertragung ablegbar ist.

3. Anordnung nach einem der vorhergehenden Ansprüche, **dadurch gekennzeichnet, dass** die Sendereinheit (9) und die zugeordnete Senderantenne (13, 15) voneinander separate Bauteile sind, die über eine elektrische Verbindungsleitung (17) miteinander verbunden sind.

4. Anordnung nach einem der vorhergehenden Ansprüche, insofern die Empfängereinheit (25) mit zugeordneter Empfängerantenne (26) in dem Mobilgerät (24) verbaut ist, **dadurch gekennzeichnet, dass** am Wandverkleidungselement (5) ein Waschtisch (1) verbaut ist, und dass die Sendereinheit (9) rückseitig am Wandverkleidungselement (5) angeordnet ist, und dass die Senderantenne (13) örtlich davon unabhängig am Waschtisch (1) montiert ist, insbesondere an dessen Unterseite, und dass der Waschtisch (1) eine Mobilgeräte-Ablagefläche (19) aufweist, auf der das Mobilgerät (24) für eine drahtlose Energie- und/oder Signalübertragung ablegbar ist.

5. Anordnung nach Anspruch 1, insofern die Empfängereinheit (25) mit zugeordneter Empfängerantenne (26) unmittelbar in dem Duschkopf (29) eingekapselt ist, **dadurch gekennzeichnet, dass** mittels des Wandverkleidungselements (27) eine Sanitärraumdeckenwand überdeckt ist und einen Duschbereich nach oben begrenzt ist, in dem ein Duschkopf (29) bewegungsfest mit einem lichten Höhenversatz (Δh) unterhalb des Wandverkleidungselements (27) verbaut ist, und dass der Duschkopf (29) zumindest einen von einer Bedieneinheit (35) elektrisch betätigbaren Atkuator (33) aufweist, mit dem zumindest eine Duschfunktion einstellbar ist, etwa eine Strahlart-, Licht-, Sound-, Aroma- und/oder Dampffunktion.

6. Anordnung nach einem der vorhergehenden Ansprüche, **dadurch gekennzeichnet, dass** die Senderantenne (13, 15) alleine oder zusammen mit der zugeordneten Sendeeinheit (9) in einer Deckenleuchte integriert ist, und dass die Deckenleuchte in verschiedenen Baugrößen ausführbar ist, so dass die horizontale Distanz zwischen einem vorhandenen Deckenanschluss und einer geeigneten Position der Senderantenne (13, 15) zur Empfängerantenne (26) überbrückbar sind.

7. Anordnung nach Anspruch 5, **dadurch gekennzeichnet, dass** die Senderantenne (13) im Wesentlichen in der Hochrichtung in Flucht zur duschkopfseitigen Empfängerantenne (26) angeordnet ist.

8. Anordnung nach einem der vorhergehenden Ansprüche, **dadurch gekennzeichnet, dass** die Empfängereinheit (25) und/oder die Empfängerantenne (26) stoff- und/oder formschlüssig am Wandverkleidungselement (5, 7, 27) montiert sind, etwa in Kleb-, Schraub- oder Clipsverbindungen.

9. Anordnung nach einem der vorhergehenden Ansprüche, **dadurch gekennzeichnet, dass** das Wandverkleidungselement (5, 7, 27) zusammen mit der Sendereinheit (9) und gegebenenfalls der Empfängerantenne (13, 15) als eine Vormontageeinheit bereitstellbar ist.

## Claims

1. An arrangement comprising an installation unit and a sanitary room, the installation unit having at least one wall cladding element (5, 7, 27) by means of which a sanitary room wall is covered, wherein at least one transmitter unit (9) with at least one associated transmitter antenna (13, 15) is arranged on the rear side of the wall cladding element (5, 7, 27) facing away from the visible side, which transmitter unit (9) is a component of a wireless power and/or signal transmission device (11), and **characterized in that** the transmitter unit (9) can be coupled in wireless energy and/or signal transmission connection with a receiver unit (25) positioned in the sanitary room, wherein the receiver unit (25) with associated receiver antenna (26) is installed in a mobile device (24), for example a mobile telephone or electric toothbrush, and **in that** electrical energy can be transmitted from the transmitter unit (9) to the receiver unit (25) in the mobile device (24) for supplying energy to the mobile device (24) or for storing energy in the mobile device (24), or **in that** the receiver unit (25) with associated receiver antenna (26) is encapsulated directly in a shower head (29).

2. The arrangement according to claim 1, insofar as the receiver unit (25) with associated receiver antenna (26) is installed in the mobile device (24), **characterized in that** the wall cladding element (7), on its visible side, has in particular a horizontal mobile device storage surface (19) on which the mobile device (24) can be placed for wireless power and/or signal transmission.

3. The arrangement according to any one of the preceding claims, **characterized in that** the transmitter unit (9) and the associated transmitter antenna (13, 15) are components separate from one another which are connected to one another via an electrical connecting line (17).

4. The arrangement according to any one of the preceding claims, insofar as the receiver unit (25) with associated receiver antenna (26) is installed in the mobile device (24), **characterized in that** a washbasin (1) is installed on the wall cladding element (5), and **in that** the transmitter unit (9) is arranged on the rear side of the wall cladding element (5) and **in that** the transmitter antenna (13) is mounted locally independently thereof on the washbasin (1), in particular on the underside thereof, and **in that** the washbasin (1) has a mobile device storage surface (19) on which the mobile device (24) can be placed for wireless power and/or signal transmission.

5. The arrangement according to claim 1, insofar as the receiver unit (25) with associated receiver antenna (26) is encapsulated directly in the shower head (29), **characterized in that** by means of the wall cladding element (27), a sanitary room ceiling wall is covered and a shower region is delimited at the top, in which shower region a shower head (29) is installed in an immovable manner with a clear height offset (Δh) below the wall cladding element (27), and **in that** the shower head (29) has at least one actuator (33) which can be electrically actuated by an operating unit (35) and with which at least one shower function can be set, for example a jet type, light, sound, aroma and/or steam function.

6. The arrangement according to any one of the preceding claims, **characterized in that** the transmitter antenna (13, 15) is integrated in a ceiling light alone or together with the associated transmitter unit (9), and **in that** the ceiling light can be designed in different sizes, so that the horizontal distance between an existing ceiling connection and a suitable position of the transmitter antenna (13, 15) to the receiver antenna (26) can be bridged.

7. The arrangement according to claim 5, **characterized in that** the transmitter antenna (13) is arranged substantially in the upward direction in alignment with the receiver antenna (26) on the shower head side.

8. The arrangement according to any one of the preceding claims, **characterized in that** the receiver unit (25) and/or the receiver antenna (26) are mounted on the wall cladding element (5, 7, 27) in a firmly bonded and/or form-fitting manner, for example by means of adhesive, screw or clip connections.

9. The arrangement according to any one of the preceding claims, **characterized in that** the wall cladding element (5, 7, 27) together with the transmitter unit (9) and, if applicable, the receiver antenna (13, 15) can be provided as a preassembled unit.

## Revendications

1. Ensemble, constitué d'une unité d'installation et d'un local sanitaire, l'unité d'installation comportant au moins un élément (5, 7, 27) d'habillage mural, au moyen duquel une paroi d'un local sanitaire est recouverte, sur la face arrière de l'élément (5, 7, 27) d'habillage mural qui est opposée à la face visible étant placée au moins une unité émettrice (9), pourvue d'au moins une antenne émettrice (13, 15), qui est une partie intégrante d'un dispositif de transmission (11) d'énergie et / ou de signaux, et **caractérisé en ce que** l'unité émettrice (9) est susceptible d'être couplée en connexion sans fil pour une transmission d'énergie et / ou de signaux avec une unité réceptrice (25) positionnée dans le local sanitaire, l'unité réceptrice (25) étant montée avec son antenne réceptrice (26) associée dans un appareil mobile (24), par exemple un téléphone mobile ou une brosse à dents électrique et **en ce que** pour alimenter en énergie l'appareil mobile (24) ou pour accumuler de l'énergie dans l'appareil mobile (24), de l'énergie électrique est transmissible de l'unité émettrice (9) vers l'unité réceptrice (25) dans l'appareil mobile (24) ou **en ce que** l'unité émettrice (25) est encapsulée avec son antenne réceptrice (26) associée directement dans une pomme à douche (29).

2. Ensemble selon la revendication 1, dans la mesure où l'unité réceptrice avec son antenne réceptrice (26) associée est montée dans l'appareil mobile (24), **caractérisé en ce que** sur sa face visible, l'élément (7) d'habillage mural comporte une surface de dépose (19) d'appareil mobile, sur laquelle l'appareil mobile (24) peut se déposer, pour une transmission sans fil d'énergie et / ou de signaux.

3. Ensemble selon l'une quelconque des revendications précédentes, **caractérisé en ce que** l'unité émettrice (9) et l'antenne émettrice (13, 15) associée sont des éléments constitutifs séparés l'un de l'autre, qui sont connectés l'un avec l'autre par l'intermédiaire d'une ligne de connexion (17) électrique.

4. Ensemble selon l'une quelconque des revendications précédentes, dans la mesure où l'unité réceptrice (25) avec son antenne réceptrice (26) associée est montée dans l'appareil mobile (24), **caractérisé en ce que** sur l'élément (5) d'habillage mural est monté un lavabo (1) et **en ce que** l'unité émettrice (9) est placée sur la face arrière de l'élément (5) d'habillage mural et **en ce que** l'antenne émettrice (13) est montée sur le lavabo (1), notamment sur la face inférieure de ce dernier, de manière localement indépendante de celui-ci, et **en ce que** le lavabo (1) comporte une surface de dépose (19) d'appareil mobile, sur laquelle l'appareil mobile (24) peut se déposer, pour une transmission sans fil d'énergie et / ou de signaux.

5. Ensemble selon la revendication 1, dans la mesure où l'unité réceptrice (25) avec son antenne réceptrice (26) associée est encapsulée dans la pomme à douche (29), **caractérisé en ce qu'**une paroi supérieure du local sanitaire est recouverte et une zone de douche est délimitée vers le haut au moyen de l'élément (27) d'habillage mural, **en ce qu'**une pomme à douche (29) est montée de manière solidaire en mouvement avec un décalage en hauteur (Δh) libre en-dessous de l'élément (27) d'habillage mural et **en ce que** la pomme à douche (29) comporte au moins un actionneur (33) susceptible d'être manoeuvré électriquement par une unité de commande (35), à l'aide duquel au moins une fonction de douche est réglable, par exemple une fonction de type de jet, de lumière, de son, d'arôme et / ou de vapeur.

6. Ensemble selon l'une quelconque des revendications précédentes, **caractérisé en ce que** l'antenne émettrice (13, 15) seule ou conjointement avec l'unité émettrice (9) associée est intégrée dans un plafonnier et **en ce que** le plafonnier est réalisable dans différentes dimensions, de sorte que la distance horizontale entre un branchement au plafond existant et une position adaptée de l'antenne émettrice (13, 15) par rapport à l'antenne réceptrice (26) puisse être surmontée.

7. Ensemble selon la revendication 5, **caractérisé en ce que** l'antenne émettrice (13) est placée en étant alignée sensiblement dans le sens de la hauteur avec l'antenne réceptrice (26) côté pomme à douche.

8. Ensemble selon l'une quelconque des revendications précédentes, **caractérisé en ce que** l'unité réceptrice (25) et / ou l'antenne réceptrice (26) sont montées par conjugaison de matière et / ou par complémentarité de forme sur l'élément (5, 7, 27) d'habillage mural, par exemple par assemblage adhésif, vissé ou par clips.

9. Ensemble selon l'une quelconque des revendications précédentes, **caractérisé en ce que** l'élément (5, 7, 27) d'habillage mural est susceptible d'être mis à disposition sous la forme d'une unité modulaire, conjointement avec l'unité émettrice (9) et le cas échéant avec l'antenne réceptrice (13, 15).
